# EUROPÄISCHE PATENTSCHRIFT

(11) **EP 3 750 398 B1**
(45) Veröffentlichungstag und Bekanntmachung des Hinweises auf die Patenterteilung: **03.07.2024**
(21) Anmeldenummer: 20188084.6
(22) Anmeldetag: 30.05.2018
(51) Int. Cl.: A01G 31/04

(54) **VORRICHTUNG UND VERFAHREN ZUR FÖRDERUNG DES WACHSTUMS VON PFLANZEN**
DEVICE AND METHOD FOR PROMOTING THE GROWTH OF PLANTS
DISPOSITIF ET PROCÉDÉ POUR STIMULER LA CROISSANCE DE PLANTES

(30) Priorität: 30.05.2017 EP 17173370
(43) Veröffentlichungstag der Anmeldung: 16.12.2020
(62) Teilanmeldung aus: 18726182.1
(73) Patentinhaber: Fraunhofer-Gesellschaft zur Förderung der angewandten Forschung e.V., 80686 München (DE)
(72) Erfinder: Vogel, Simon, 52074 Aachen (DE); Schillberg, Stefan, 52074 Aachen (DE)
(74) Vertreter: Roth, Andy Stefan

(56) Entgegenhaltungen:
- EP-A1- 0 220 348
- EP-A1- 2 491 784
- WO-A1-2010/008335
- WO-A1-2015/122849
- WO-A1-2016/023947
- DE-B- 1 286 800

## Beschreibung

Die Erfindung betrifft eine Vorrichtung zur automatisierten Pflanzenaufzucht, die über ein entlang einer Förderstrecke bewegbares Förderband zum wenigstens abschnittsweisen Transport von Pflanzen verfügt Während des Transports der Pflanzen entlang der Förderstrecke, die in wenigstens einem ersten Abschnitt zumindest annähernd horizontal und in wenigstens einem zweiten Abschnitt zumindest annähernd vertikal verläuft, werden die Pflanzen zumindest zeitweise von einer Nährstoffversorgungseinheit mit Wasser und Nährstoffen versorgt.

Seit vielen Jahren sind die hydroponische und die aeroponische Pflanzenzucht bekannt, wobei diese insbesondere in den letzten Jahrzehnten zu intensiv genutzten Kultivierungssystemen, vor allem für Gewächshauskulturen, etwa für Tomaten, Gurken und Salate, geworden sind. Die Massenproduktion von landwirtschaftlichen Produkten in vollklimatisierten Gebäuden unter strenger Kontrolle der externen Einflüsse wird auch als sogenanntes "indoor-farming" bezeichnet.

In diesem Zusammenhang sind Systeme zur Aufzucht von Pflanzen bekannt, bei denen die Pflanzen in einem Regalsystem angeordnet und während der Wachstumsphase automatisiert mit einem Nährmedium versorgt werden. Ein derartiges System wird beispielsweise in der JP 2014-168420 A beschrieben, wobei hier die für die Aufzucht vorgesehenen Pflanzen in einer horizontalen Ebene jeweils in einem Trägermedium fixiert angeordnet sind und durch regelmäßiges Fluten und Ablassen von Nährmedium mit Wasser und Nährstoffen versorgt werden. Zusätzlich erfolgt eine künstliche Beleuchtung mit Hilfe von direkt über den Pflanzen angebrachten Leuchtstoffröhren oder LEDs.

Ferner ist aus der AT 250728 ein spezielles Gewächshaus bekannt, das in Form eines Turmgewächshauses ausgeführt ist Wesentlich hierbei ist, dass die Höhe eines Gebäudes ausgenutzt wird, um eine Förderstrecke für die Pflanzenzucht zu realisieren. Das beschriebene Gewächshaus verfügt über eine Mehrzahl von schlangenförmig angeordneten Förderbändern zum Transport der Pflanzen, wobei das Förderband als Umlaufbahn ausgeführt ist und obere sowie untere Umlenkrollen aufweist, sodass die Pflanzen in unterschiedlicher Richtung vertikal bewegt werden können. Um eine effektive Beleuchtung sicherzustellen sind zwischen den vertikal angeordneten Förderbändern geeignete Leuchtstoffröhren vorgesehen.

Eine weitere technische Lösung zur automatisierten Pflanzenaufzucht wird in der US 2012/0279122 A1 beschrieben. Die beschriebene Anlage verfügt über ein Förderband, das schlangenförmig angeordnet ist und teilweise in vertikaler Richtung verläuft Für die Umlenkung des Förderbandes sind entsprechende Umlenkrollen vorgesehen. Ferner sind für den Transport der Pflanzen spezielle Behälter vorgesehen, in denen sich Trägermaterial zur Aufnahme von Samen oder Pflanzen befindet und die mithilfe spezieller Hakenelemente in das umlaufende Förderband eingehakt werden. Die beschriebenen Behälter zur Aufnahme der Pflanzen erstrecken sich hierbei über die gesamte Breite des Förderbandes und können jeweils eine Mehrzahl von Pflanzen nebeneinander aufnehmen. EP 0 220 348 A1 offenbart eine Vorrichtung umfassend die Merkmale des einleitenden Teils von Anspruch 1.

Die bekannten automatisierten Systeme zur Pflanzenzucht haben trotz des erhöhten Energiebedarfs eine Reihe von Vorteilen gegenüber der konventionellen Landwirtschaft auf Äckern. Neben einer vollständigen Wetterunabhängigkeit können die klimatischen Verhältnisse im Inneren des Gewächshauses über die gesamte Zeit optimal an die jeweiligen Pflanzen angepasst und so ein konstantes Pflanzenwachstum erreicht werden. Aufgrund spezieller Anlagen zur Wasserrückgewinnung wird darüber hinaus zur Aufzucht der Pflanzen deutlich weniger Wasser als bei der Bewirtschaftung von Äckern im Freien benötigt Außerdem wird vergleichsweise wenig Dünger benötigt und durch die Pflanzenaufzucht in vollklimatisierten Räumen wird ein pestizidfreier Pflanzenanbau möglich.

Bei Einsatz vertikal angeordneter Förderstrecken wird ferner der Vorteil einer wesentlich besseren Ausnutzung der zur Verfügung stehenden Fläche erreicht. Dies ist insbesondere in urbanen Gebieten bzw. Industrieländern, die über einen vergleichsweise geringen Anteil von für die Landwirtschaft geeigneten Flächen verfügen, wie etwa Japan, von großem Vorteil.

Problematisch an den bekannten Systemen zur automatisierten Pflanzenaufzucht in vollklimatisierten Räumen ist oftmals, dass die verwendeten Anlagen nur verhältnismäßig aufwendig an unterschiedliche Pflanzen angepasst werden können. Bei einem Wechsel der angebauten Pflanzen muss berücksichtigt werden, dass sich die Größe verschiedener Pflanzen in der Wachstumsphase in unterschiedlichem Maße und in unterschiedlichen Zeiträumen verändert. Eine Adaption der bekannten Systeme zur automatisierten Pflanzenaufzucht an die jeweils geänderten Bedingungen ist nur schwer möglich. Im Übrigen stellt es regelmäßig ein Problem dar, die Pflanzen mit den erforderlichen Nährstoffen sowie Wasser zu versorgen, ohne dass es zu Schädigungen am Blatt- oder Wurzelwerk kommt

Ausgehend von den aus dem Stand der Technik bekannten Systemen zur automatisierten Pflanzenaufzucht und den zuvor erläuterten Problemen liegt der Erfindung die Aufgabe zu Grunde, ein Pflanzenaufzuchtsystem bereitzustellen, das eine einfache, der Pflanzenwachstumsphase angepasste Aufzuchtvon Nutz- und Zierpflanzen, die vorzugsweise in geschlossenen Räumen realisiert wird, ermöglicht Die anzugebende technische Lösung soll insbesondere auf vergleichsweise einfache Weise eine nahezu vollständige Automatisierung der Pflanzenaufzucht von der Aufbringung eines Samens bis zur Ernte der vollständig ausgereiften Pflanze ermöglichen. Weiterhin soll sichergestellt werden, dass der Wasser- sowie Nährstoffbedarf auf ein Minimum begrenzt werden kann. Hierbei soll sich die erfindungsgemäß ausgeführte Vorrichtung durch einen einfachen konstruktiven Aufbau auszeichnen, der auf bevorzugte Weise mit den für den Bau automatisierter Gewächshaussysteme bekannten Systemkomponenten realisierbar ist

Die vorstehende Aufgabe wird mit einer Vorrichtung zur automatisierten Pflanzenaufzucht gemäß Anspruch 1 gelöst. Ein Verfahren zur Pflanzenaufzucht, das die Erfindung nutzt, ist im Anspruch 12 angegeben. Vorteilhafte Ausführungsformen der Erfindung sind Gegenstand der abhängigen Ansprüche und werden in der folgenden Beschreibung unter teilweiser Bezugnahme auf die Figuren näher erläutert

Die Erfindung betrifft eine Vorrichtung zur Förderung des Wachstums von Pflanzen, insbesondere zur automatisierten Pflanzenaufzucht, mit einem entlang einer Förderstrecke bewegbaren Förderband zum wenigstens abschnittsweisen Transport von Pflanzen. Die transportierten Pflanzen werden während der Bewegung entlang der Förderstrecke zumindest zeitweise beleuchtet sowie von einer Nährstoffversorgung mit Nährstoffen und Wasser versorgt und werden während ihrer Förderung entlang der Förderstrecke in wenigstens einem ersten Abschnitt zumindest annähernd horizontal und in wenigstens einem zweiten Abschnitt zumindest annähernd vertikal bewegt Die Erfindung zeichnet sich durch die im Kennzeichenteil des Anspruchs 1 genannten technischen Merkmale aus. Die folgende Beschreibung offenbart spezielle und/oder alternative Ausführungsformen der beanspruchten Erfindung.

Die Pflanzen sind zumindest zeitweise während des Transports entlang der Förderstrecke derart relativ zum Förderband fixiert sind, dass Wurzeln der Pflanzen zumindest teilweise in einen unterhalb einer Unterseite des Förderbandes angeordneten Bereich hineinragen, während Blätter und/oder Früchte der Pflanzen wenigstens teilweise in einen Bereich, der sich oberhalb einer der Unterseite gegenüberliegenden Oberseite des Förderbandes befindet, hineinragen, wobei unterhalb des Förderbandes eine Nährmediumversorgung angeordnet ist, sodass die auf dem Förderband fixierten Pflanzen, insbesondere die Wurzeln unterhalb des Förderbandes, aeroponisch mit Nährmedium versorgt werden. In diesem Zusammenhang sind wesentliche Merkmale der Erfindung, dass die Pflanzen während ihrer Wachstumsphase auf dem Förderband fixiert sind, kontinuierlich bewegt und vorzugsweise entlang einer Lichtquelle transportiert werden und dass sich beabstandet zur Unterseite des Förderbandes eine Nährmediumversorgung, insbesondere mit Sprühdüsen, befindet, die in diesem Bereich eine aeroponische Versorgung der Pflanzen mit Nährmedium gewährleistet Weiterhin wird der Wurzelbereich während der Bewegung, die bevorzugt sowohl in vertikaler als auch zumindest zeitweise in horizontaler Richtung erfolgt, kontinuierlich mit Nährstoffen versorgt. Aufgrund der speziellen Anordnung der Förderstrecke mit zumindest annähernd vertikal in Aufwärts- sowie Abwärtsrichtung verlaufenden Streckenabschnitten sind die Pflanzen einer ständigen orbitropischen Neuausrichtung ausgesetzt, was das Pflanzenwachstum begünstigt

In einer speziellen Ausführungsform der Erfindung verfügt das Förderband wenigstens bereichsweise über ein Trägermaterial, in dem die Pflanzen zumindest zeitweise während des Transports entlang der Förderstrecke fixiert sind. Vorzugsweise wird das Trägermaterial derart gewählt, dass die Samen oder Pflanzen guten Halt finden und das Material darüber hinaus Wasser und/oder Nährmedium weiterleiten und zumindest zeitweise speichern kann. Da die erfindungsgemäß ausgeführte Vorrichtung die Pflanzen zumindest teilweise in annähernd vertikaler Richtung transportiert, ist es möglich, dass gemäß einer besonderen Weiterbildung der Erfindung die Pflanzen während ihrer Wachstumsphase kontinuierlich entlang einer Beleuchtungsquelle und/oder auf diese zu bewegt werden, wobei die Beleuchtung bevorzugt erfolgt sobald die Pflanzen in vertikaler Richtung bewegt werden. Auf vorteilhafte Weise wird gleichzeitig der auf der Unterseite des Förderbandes angeordnete Wurzelbereich aeroponisch mit Nähstoffen und Feuchtigkeit versorgt. Auch die aeroponische Versorgung des Wurzelbereichs mit Nährstoffen erfolgt vorzugsweise zumindest zeitweise während die Pflanzen in vertikaler Richtung bewegt werden. In diesem Zusammenhang ist es denkbar, dass zwischen zwei vertikal verlaufenden Abschnitten der Förderstrecke ein oberer Umlenkpunkt vorgesehen ist, sodass die Pflanzen mit dem Förderband in vertikaler Richtung nach oben und anschließend nach Umlaufen des Umlenkpunktes in vertikaler Richtung nach unten bewegt werden, wobei die Ausrichtung der Pflanzen, von der Wurzel zur Sprossspitze, senkrecht zu dieser Bewegungsrichtung ist.

Generell ist es denkbar, dass zur Beleuchtung natürliches und/oder mittels einer Beleuchtungseinheit, die bspw. wenigstens eine Leuchtstoffröhre und/oder eine LED aufweist, künstlich erzeugtes Licht verwendet wird. Das Vorsehen einer Beleuchtungseinheit zur Erzeugung von Licht hat den Vorteil, dass die Beleuchtung gezielt, insbesondere angepasst an die zu züchtende Pflanzenart, und/oder das Pflanzenwachstum abgestimmt, und bei Bedarf zu jeder Zeit erfolgen kann. Gemäß einer besonderen Weiterbildung der Erfindung erfolgt die Beleuchtung der Pflanzen lediglich in bestimmten Bereichen der Förderstrecke, insbesondere in ausgewählten Bereichen, in denen die Pflanzen in vertikaler Richtung bewegt werden und ganz besonders bevorzugt in der Hälfte der insgesamt vorgesehenen vertikalen Bereiche, so dass ein Tag-Nacht-Rhythmus imitiert werden kann. Auf vorteilhafte Weise erfolgt die Beleuchtung mit vertikal angeordneten LED Paneelen oder anderen Beleuchtungssystemen.

Gemäß einer speziellen Weiterbildung ist ferner vorgesehen, dass die Beleuchtungseinheit derart ausgeführt ist, dass eine Beleuchtung der Pflanzen in gezielt ausgewählten Abschnitten der Förderstrecke stattfindet Auf vorteilhafte Weise findet die Beleuchtung statt, während die Pflanzen kontinuierlich auf einem vertikal angeordneten Abschnitt der Förderstrecke nach oben bewegt werden. Weiterhin ist es vorteilhaft, dass die Pflanze nach Umlaufen des Umlenkpunktes, insbesondere sobald sie in vertikaler Richtung nach unten bewegt werden, zumindest zeitweise nicht mehr beleuchtet werden.

In einer besonders vorteilhaften Ausführungsform werden die auf dem Förderband fixierten Pflanzen, insbesondere die Wurzeln unterhalb des Förderbandes, aeroponisch mit Nährmedium versorgt, sobald sie in vertikaler Richtung bewegt werden, während sie im Bereich eines unteren Umlenkpunktes, der sich zwischen zwei vertikal verlaufenden Teilabschnitten der Förderstrecke befindet, zumindest teilweise durch ein Tauchbad bewegt werden, sodass in diesem Bereich eine hydroponische Nährstoffversorgung der Pflanzen, insbesondere des Wurzelwerks erfolgt. Auf der schlangen- bzw. meanderförmig ausgebildeten Förderstrecke mit vertikal verlaufenden Streckenabschnitten, zwischen denen sich untere und obere Umlenkpunkte oder -bereiche befinden, findet auf diese Weise eine kontinuierliche Versorgung der Pflanzen mit Nährstoffen und Feuchtigkeit statt Für die aeroponische Bewässerung des Wurzelwerks der Pflanzen wird bevorzugt eine Nährmedium-Vernebelungsanlage eingesetzt

Mithilfe eines wie vorgeschrieben ausgeführten automatisierten Systems zur Pflanzenaufzucht ist es auf bevorzugte Weise möglich, auf der Unterseite des Förderbandes eine stetige aeroponische Bewässerung der Wurzeln vorzusehen, während im Bereich der unteren Umlenkpunkte ein hydroponisches Bad des Pflanzenträgermaterials beim Durchlaufen der Talphase des Förderbandes realisiert wird.

Durch die Fixierung der Pflanzen auf dem Förderband wird hierbei eine permanente oder zumindest über lange Zeiträume andauernde aeroponische Bewässerung realisiert, ohne dass das Blattwerk der Pflanze unnötig befeuchtet wird. Auf diese Weise werden Erkrankungen der Blattmasse zuverlässig verhindert. Die insbesondere auf den vertikalen Förderstreckenabschnitten unterhalb des Förderbandes befindliche Atmosphäre wird in Bezug auf die Temperatur und die Luftfeuchtigkeit mittels einer Sensorik überwacht und die Werte auf geeignete Weise über eine zentrale Steuereinheit geregelt, sodass eine zu hohe Luftfeuchtigkeit in diesem Bereich zuverlässig vermieden werden kann.

Auf vorteilhafte Weise ist die Förderstrecke derart dimensioniert und/oder die Laufgeschwindigkeit des Förderbandes derart eingestellt, dass eine einmalige Auf- und Abbewegung des Förderbandes über eine Umlenkung bei gleichzeitiger unterseitiger Befeuchtung des Wurzelbereichs als ein Modul ausgeführt ist, wobei eine derartige Kultivierungsschleife bevorzugt in 24 Stunden durchlaufen wird. Durch einen modulartigen Aufbau ist es auf vorteilhafte Weise möglich, eine Gesamtanlage zur automatisierten Aufzucht von Pflanzen an die jeweiligen Bedürfnisse, also an die jeweilige Pflanzenspezies und/oder die jeweilige Vegetationsphase anzupassen. Durch die Verlängerung des Förderbandes durch Aneinanderreihung von Modulen kann so auf einfache Weise eine komplette Vegetationsperiode einer Kulturpflanze dargestellt werden, wobei jedes Modul den Bedürfnissen des Wachstumsstadions der jeweiligen Pflanzen bezüglich Nährstoffbedarf, Beleuchtung und Flächenbedarf angepasst ist. Aus diesem Grund sind gemäß einer bevorzugten auf der Erfindung beruhenden Gestaltung die einzelnen Module bzw. Abschnitte der Förderstrecke mit dem Förderband derart ausgeführt, dass insbesondere die Länge der unteren Abschnitte, die zwischen zwei vertikal verlaufenden Streckenabschnitten angeordnet sind, verändert werden können. Sobald mehrere Module zu einer Gesamtanlage zusammengefügt werden, ist es sinnvoll, wenn die Abstände zwischen einem annähernd vertikal nach unten und einem annähernd vertikal nach oben verlaufenden Streckenabschnitt mit zunehmender Transportdauer der Pflanzen größer werden, sodass die Abstände dem Pflanzenwachstum angepasst sind. Durch eine gezielte Variation des Abstandes der vertikal verlaufenden Strecken ist es somit möglich den Abstand an die jeweilige Größe der auf dem Förderband fixierten Pflanzen anzupassen.

Weiterhin ist es alternativ oder in Ergänzung zu der zuvor beschriebenen Ausführungsform auf vorteilhafte Weise denkbar, die Anpassung einer Vorrichtung zur automatisierten Pflanzenaufzucht an den Größenbedarf der jeweiligen Pflanzen durch eine Veränderung des Abstandes der Punkte, an denen die einzelnen Pflanzen auf dem Förderband fixiert sind, zu erreichen. Vorzugsweise sind hierfür mechanische Elemente vorgesehen, die eine bedarfsgerechte Einstellung des Abstandes der einzelnen Fixierungspunkte gewährleisten. So ist es etwa denkbar, dass die einzelnen Fixierungspunkte mit zunehmender Transportdauer einer Pflanze und dem damit einhergehenden Pflanzenwachstum weiter auseinandergezogen werden, wobei Raststellungen in verschiedenen Stellungen denkbar sind. Gemäß einer weiteren bevorzugten Ausführungsform der Erfindung verfügt das Förderband über aneinandergereihte steife Lamellen, welche aus unterschiedlichsten Materialen, wie etwa Polyvinylchlorid (PVC) hergestellt sein können. Derartige Lamellen ermöglichen eine einfache Verankerung der Pflanzen und zeichnen sich gleichzeitig durch ein hohes Maß an Flexibilität aus, sodass das Förderband sich über die Umlenkrollen führbar ist.

Durch diese Anpassung der Förderstrecke bzw. des Förderbandes an die sich verändernde Größe der Pflanzen wird einerseits dem steigenden Platzbedarf der Pflanze Rechnung getragen und andererseits der Einsatz von Material und Energie minimiert. Auf diese Weise wird die Anlage sowohl unter ökonomischen als auch unter ökologischen Gesichtspunkten besonders effektiv betrieben, da beispielsweise der Aufwand in der Jungpflanzenphase für Bewässerung- und Beleuchtung deutlich verringert wird.

Die Erfindung sieht vor, dass die Förderstrecke bzw. das entlang der Förderstrecke bewegte Förderband auf einer geschlossenen Kreis- oder Ovalbahn bewegt wird. Es sind somit zwei vertikale Abschnitte sowie zwei horizontale Abschnitte im Bereich der Umlenkpunkte vorgesehen, die die vertikalen Abschnitte mit einander verbinden. Durch Veränderung der Länge der vertikalen Abschnitte des Förderbandes kann eine derartige Pflanzenaufzuchtanlage zumindest nahezu beliebig in die Höhe gebaut werden. Bevorzugt ist eine innenliegende aeroponischer Nährstoffversorgung zur Kultivierung der bewegten Pflanzen vorgesehen. Eine derartige Pflanzenaufzuchtanlage eignet sich ganz besonders für die Aufzucht von Erdbeeren, Schnittsalaten, Spinat, Rucola und/oder Buschtomaten. Eine vorteilhafte Ernte ist möglich, sofern die Ernte der Pflanzen oder Früchte im Bereich des unteren Umkehrpunktes, insbesondere mit Hilfe einer automatisiert arbeitenden Erntemaschine, erfolgt

Gemäß einer weiteren speziellen Gestaltung der erfindungsgemäß ausgeführten Vorrichtung ist eine Beleuchtungseinheit vorgesehen, die eine gezielte und kontrollierte Bestrahlung der Pflanzen mit den geeigneten Wellenlängen ermöglicht. Auch in diesem Fall ist es wiederum denkbar, die Beleuchtung den jeweiligen Bedürfnissen der Pflanze bzw. den unterschiedlichen Wachstumsphasen anzupassen. Auf diese Weise wird die Beleuchtung der Pflanzen gezielt an das Pflanzenwachstum angepasst. Gemäß einer weiteren Ausbildung ist die Vorrichtung derart ausgeführt, dass sowohl beleuchtete, als auch unbeleuchtet Abschnitte der Förderstrecke vorgesehen sind.

Auf bevorzugte Weise ist es weiterhin vorgesehen, dass die erfindungsgemäße Vorrichtung zur automatisierten Pflanzenzucht über eine Bestückungsanlage verfügt, durch die eine automatisierte Bestückung des Förderbandes und/oder des auf dem Förderband vorgesehenen Trägermaterials mit wenigstens einem Samen und/oder mit einer Jungpflanze erfolgt. Ebenso ist es denkbar, dass in einem Bereich des Förderbandes ein Erntemodul vorgesehen ist, mit dem die auf das gewünschte Maß gewachsene Pflanze, insbesondere das Blattwerk und/oder die Frucht, entfernt werden kann. Weiterhin bevorzugt verfügt die erfindungsgemäß ausgeführte Vorrichtung über einen Abschnitt, der sich vorzugsweise im Anschluss an das Erntemodul befindet, in dem das Förderband gereinigt und/oder sterilisiert wird.

Vorzugsweise ist eine Vorrichtung gemäß der Erfindung derart ausgeführt, dass eine Bestückungs- und eine Ernteeinheit vorgesehen sind, zwischen denen sich in Bewegungsrichtung des Förderbandes eine Reinigungs- und/oder eine Sterilisierungsanlage, insbesondere eine Dampfstilisierungsanlage befindet, sodass das Förderband nach der Ernte der gewachsenen Pflanzen bzw. vor einer Neubestückung gereinigt und/oder sterilisiert wird.

In Bezug auf die Fixierung der Pflanzen im oder am Förderband, ist es grundsätzlich denkbar, dass die Samen und/oder Jungpflanzen direkt oder mittelbar über ein Trägermaterial im oder am Förderband fixiert werden. Gemäß einer alternativen Ausführungsform verfügt das Förderband über geeignete Pflanzenbehälter, die mit Pflanzen bestückt werden können und die mit Hilfe von Befestigungselementen am umlaufenden Förderband befestigt werden. In diesem Zusammenhang ist es etwa denkbar, dass das Förderband wenigstens eine Förderkette aufweist, in die ein als Befestigungselement dienender Haken des Pflanzenbehälters eingehängt wird, sobald eine Pflanze entlang der Förderstrecke transportiert werden soll. Werden entsprechend mit dem Förderband verbindbare Pflanzenbehälter eingesetzt, so werden diese vorzugsweise zum Erntevorgang von dem Förderband bzw. der Förderkette gelöst, nach Abschluss der Ernte gereinigt und schließlich wieder der Bestückungsanlage zugeführt. Nach Bestückung mit einem Samen oder einer Jungpflanze werden entsprechende Pflanzenbehälter wiederum am Anfang des Förderbandes bzw. der Förderkette in diese eingehängt.

Neben einer speziellen Vorrichtung zur automatisierten Pflanzenaufzucht betrifft die Erfindung des Weiteren ein Verfahren zur automatisierten Aufzucht von Nutz- oder Zierpflanzen.

Wesentlich an dem erfindungsgemäß ausgeführten Verfahren ist, dass die Pflanzen fest auf oder am Förderband fixiert transportiert werden und durch den wenigstens zeitweise stattfindenden, zumindest nahezu vertikalen Transport verbunden mit einer Umlenkung an oberen und unteren Umlenkpunkten einer ständigen orbitropischen Neuausrichtung ausgesetzt sind. Aufgrund der fixierten Pflanzenführung ist es ferner vergleichsweise einfach möglich, eine permanente aeroponisch Bewässerung sicherzustellen, ohne dass der Blattanteil der Bepflanzung unnötig befeuchtet wird. Aus diesem Grund können Erkrankungen der Blattmasse weitgehend vermieden werden. Die Art der räumlichen Trennung von Blattwerk und Wurzelbereich ermöglicht außerdem eine besser kontrollierbare und regelbare Atmosphäre und es kann eine zu hohe Luftfeuchtigkeit zuverlässig vermieden werden.

Ein besonderer Vorteil der Erfindung besteht weiterhin in der Möglichkeit, die Förderstrecke bzw. das Förderband an die Größe der Pflanzen anzupassen. Dies erfolgt bevorzugt durch mechanische Aufspreizung des Förderbandes im Bereich der Fixierpunkte und/oder der Abstände zwischen einzelnen Kultivierungsmodulen, um dem zunehmenden Platzbedarf der wachsenden Pflanzen gerecht zu werden. Durch ein auf die veränderten Abstände zwischen den Pflanzen hin optimiertes Beleuchtungs- und Bewässerungsregime lassen sich deutliche Ersparnisse in der Installation und dem Energieverbrauch realisieren. Durch die erfindungsgemäße Vorrichtung, die bevorzugt eine modulare Aneinanderreihung von in vertikaler Richtung schleifenartig ausgeführten Kultivierungsmodulen vorsieht, ist eine besonders flexible, der Bepflanzung und dem Wachstumsstadium der Pflanzen angepasste und darüber hinaus ökonomische Pflanzenaufzucht möglich. Weiterhin können durch Kombination mit einer automatisierten Bestückungs- und/oder Ernteeinheit am Anfang bzw. Ende der Förderstrecke auf vorteilhafte Weise erhebliche Kosteneinsparungen realisiert werden.

Im Folgenden wird die Erfindung ohne Beschränkung des allgemeinen Erfindungsgedankens anhand von Ausführungsbeispielen und unter Bezugnahme auf die Figuren näher erläutert. Dabei zeigen:
- Figur 1:: Schematische Darstellung einer erfindungsgemäß ausgeführten Vorrichtung zur automatisierten Pflanzenaufzucht,
- Figur 2:: Draufsicht auf ein für eine Vorrichtung zur automatisierten Pflanzenaufzucht geeignetes Förderband sowie
- Figur 3:: Schematische Darstellung eines für einen Pflanzenaufzuchtversucht verwendeten Demonstrators einer erfindungsgemäß ausgeführten Pflanzenaufzuchtanlage.

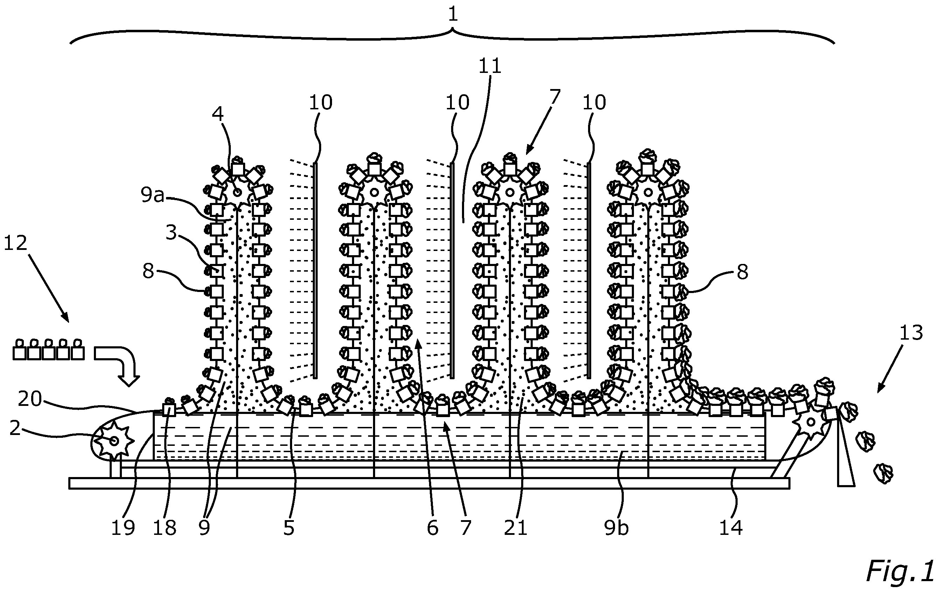

Figur 1 zeigt schematisch eine erfindungsgemäß ausgeführte Vorrichtung zur automatisierten Pflanzenaufzucht. Wesentlich an dieser Vorrichtung ist, dass die Pflanzen 8 während ihres Transports entlang der Förderstrecke 1 auf dem Förderband 2 fixiert sind, wobei sich die Wurzeln der Pflanzen 8 zumindest zum größten Teil auf einer anderen Seite des Förderbandes 2 als das Blattwerk befinden. Die Dimensionierung der Förderstrecke 1 sowie die Bewegungsgeschwindigkeit des Förderbandes 2 sind derart gewählt, dass der Zeitraum, den die Pflanzen 8 von der Aufbringung eines Samens oder einer Jungpflanze auf das Förderband 2 bis zur Entfernung vom Förderband 2 entlang der Förderstrecke 1 bewegt werden, einer Vegetationsphase der entsprechenden Pflanze 8 entspricht.

In Bezug auf die Anordnung der Förderstrecke 1 ist von besonderer Bedeutung, dass die auf dem Förderband 2 fixierten Pflanzen 8 abschnittsweise sowohl in Aufwärts- als auch in Abwärtsrichtung jeweils vertikal bewegt werden, während diese insbesondere im Bereich der oberen und unteren Umlenkpunkte 4, 5 zwischen den einzelnen vertikalen Streckenabschnitten 6 zumindest zeitweise in horizontaler Richtung bewegt werden.

Am Anfang der Förderstrecke 1 ist eine Bestückungseinheit 12 vorgesehen, durch die Aufnahmeelemente 3 des Förderbandes 2 jeweils mit einer jungen Pflanze 8 bestückt werden. Die Aufnahmeelemente 3 gemäß der beschriebenen Ausführungsform verfügen jeweils über ein Trägermaterial 18, bevorzugt Steinwolle, in dem die Pflanze 8, insbesondere deren Wurzelwerk fixiert ist

Wesentlich ist, dass sich die Wurzeln der Pflanzen 8 in einem Bereich 19 unterhalb des Förderbandes 2 befinden, während sich das Blattwerk in einen Bereich 20 oberhalb des Förderbandes 2 erstreckt. Die Bereiche 19, 20, in denen sich das Wurzelwerk einerseits sowie das Blattwerk andererseits befinden, sind auf diese Weise räumlich voneinander getrennt. Darüber hinaus befindet sich das Wurzelwerk, während die Pflanzen 8 auf den vertikalen Abschnitten 6 der Förderstrecke 1 bewegt werden, in einem belüfteten Raum, in dem eine aeroponische Befeuchtung und Nährstoffversorgung 9a der Pflanzen 8 erfolgt.

Aufgrund der speziellen Gestaltung der Förderstrecke 1 werden die Pflanzen 8 mit dem Förderband 2 jeweils abwechselnd in vertikaler Richtung bis zu einem oberen Umlenkpunkt 4 und anschließend wiederum nach unten in Richtung auf einen unteren Umlenkpunkt 5 bewegt. Sobald die Pflanzen 8 das untere Ende der Vertikalstrecke 6 erreichen, werden diese zumindest über einen kurzen Streckenabschnitt 7 in horizontaler Richtung bewegt. Während dieser Bewegung im Bereich des unteren Umlenkpunktes 5 wird das Trägermaterial mit den darin angeordneten Wurzeln der Pflanze 8 in ein Tauchbad 9b eingetaucht, sodass eine hydroponische Befeuchtung und Nährstoffversorgung der Pflanzen 8 bewirkt wird. Im Anschluss an diese zumindest kurzzeitige Horizontalbewegung werden die Pflanzen 8 wiederum über die nächsten beiden vertikalen Streckenabschnitte 6 der Förderstrecke 1 mit dem dazwischen angeordneten oberen Umlenkpunkt 4 bewegt. Während die Pflanzen 8 entlang dieser vertikal angeordneten Streckenabschnitte 6 bewegt werden, erfolgt wiederum eine aeroponische Befeuchtung 9a der Pflanzenwurzeln auf der Unterseite des Förderbandes 2.

Ein Abschnitt der Förderstrecke 1, der aus zwei vertikalen Abschnitten 6, in denen die Pflanzen 8 von unten nach oben sowie anschließend von oben nach unten bewegt werden, und einem zwischen den Vertikalstrecken angeordneten Umlenkpunkt 5 besteht, wird als ein Modul oder auch Kultivierungsmodul bezeichnet. Hierbei ist ein Modul so ausgeführt und die Geschwindigkeit des Förderbandes 2 derart eingestellt, dass die Pflanzen 8 ein solches Modul innerhalb von 24 Stunden durchlaufen. Eine Gesamtanlage wiederum wird aus der benötigten Anzahl von Modulen zusammengesetzt, sodass eine gesamte Wachstumsphase der jeweiligen Pflanze 8 realisiert werden kann.

Im Weiteren verfügt die Vorrichtung zur automatisierten Pflanzenzucht über eine Beleuchtungseinheit 10, die derart ausgeführt ist, dass die Pflanzen 8 während ihrer Bewegung entlang der Förderstrecke 1 teilweise mit künstlich erzeugtem Licht beleuchtet und teilweise nicht beleuchtet werden. In dem in Figur 1 dargestellten Ausführungsbeispiel findet die Beleuchtung der Pflanzen 8 stets während ihrer Abwärtsbewegung auf einem vertikalen Streckenabschnitt 6 zwischen dem oberen 4 und dem unteren 5 Umlenkpunkt statt Dagegen ist während der Bewegung der Pflanzen 8 entlang eines von unten nach oben verlaufenden Streckenabschnitts eine Beschattungsphase 11 vorgesehen. Hier ist die Beleuchtungseinheit 10 derart abgedeckt, dass die Pflanzen 8 nicht beleuchtet werden. Grundsätzlich ist es denkbar, die Art, Intensität und Dauer der Beleuchtung an die jeweilige Pflanzenart anzupassen. In jedem Fall erfolgt die Beleuchtung kontrolliert bzw. wird mit Hilfe von Sensoren sowie einer Steuereinheit auf geeignete Weise geregelt. In dem in Figur 1 gezeigten Ausführungsbeispiel sind als Beleuchtungseinheit 10 LED-Panel vorgesehen, die jeweils gegenüber dem in Abwärtsrichtung verlaufenden vertikalen Streckenabschnitt 6 angeordnet sind.

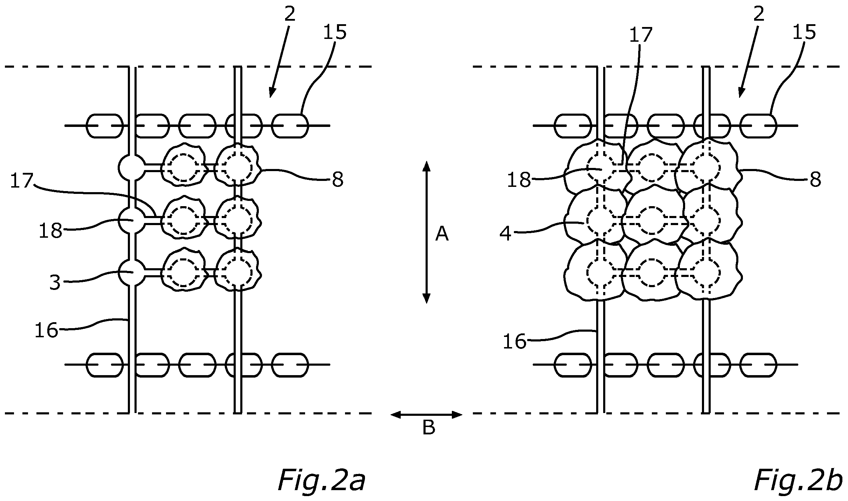

Im Übrigen verfügt die in Figur 1 dargestellte Vorrichtung zur automatisierten Pflanzenaufzucht über eine Verstelleinheit 21, sodass der Abstand zwischen den einzelnen aus zwei vertikalen Streckenabschnitten 6 und einem dazwischen angeordneten oberen Umlenkpunkt 4 bestehenden Modulen an das Größenwachstum der einzelnen Pflanzen 8 angepasst werden kann. Wie Figur 1 deutlich zu entnehmen ist, nimmt die Größe der Pflanzen 8 während ihres Transports entlang der Förderstrecke 1 zu. In dem Maß, in dem die Pflanzen 8 wachsen, wird einerseits der Abstand zwischen den einzelnen Modulen vergrößert und andererseits die Beleuchtung an den geänderten Lichtbedarf aufgrund des größer gewordenen Grünanteils der Pflanzen 8 angepasst In Ergänzung zu diesen Maßnahmen ist auch das Förderband 2 derart gestaltet, dass in Abhängigkeit des Pflanzenwachstums der Abstand zwischen den einzelnen Aufnahmeelementen 3, in denen die Pflanzen jeweils fixiert sind, veränderbar ist Eine spezielle Ausführungsform eines an das Größenwachstum der Pflanzen anpassbares Förderband 2 wird in diesem Zusammenhang mit Figur 2 erläutert

Am Ende der Förderstrecke 1 ist eine automatisierte Ernteeinheit 13 vorgesehen, die die nunmehr zu normaler Größe herangewachsen Pflanzen 8 vom umlaufenden Förderband 2 entfernt. Im unmittelbaren Anschluss an die Ernteeinheit 13 wird das Förderband 2 wiederum umgelenkt und läuft schließlich zurück zur Bestückungseinheit 12. Um die erforderliche Reinigung sowie Sterilisation des Förderbandes 2 sicherzustellen, wird das Förderband 2 auf der Strecke zwischen der Ernteeinheit 13 und der Bestückungseinheit 12 zunächst gereinigt und schließlich mithilfe einer Dampfsterilisationsanlage 14 oberflächensterilisiert wird. Das Förderband 2 gelangt somit vollkommen gereinigt und sterilisiert wieder zur Bestückungseinheit 12, durch die die einzelnen Aufnahmeelemente 3 des Förderbandes 2 erneut mit Trägermaterial 18, zumindest sofern dies nicht mehrfach verwendbar ist, sowie mit Samen oder Jungpflanzen 8 bestückt werden.

Wie in Figur 1 dargestellt, ist es vorteilhaft, wenn die einzelnen Aufnahmeelemente 3 zunächst in der Bestückungseinheit 12 oder einem vorgelagerten Prozessschritt mit Trägermaterial 18, sofern dieses nicht wiederverwendbar ist, und mit einem Samen oder einer Jungpflanze 8 bestückt werden, so dass die bereits bestückten Aufnahmeelemente 3 auf das Förderband 2 aufgebracht bzw. an diesem befestigt werden können.

Generell ist es allerdings auch denkbar, dass die Aufnahmeelemente 3 in das Förderband 2 integriert oder zumindest fest mit diesem verbunden sind, so dass die Bestückungseinheit 12 lediglich einen Samen oder eine Jungpflanze 8 und bei Bedarf neues Trägermaterial 18 in die Aufnahmeelemente 3 einbringt.

In beiden Fällen ist es möglich, dass die Aufnahmeelemente 3 bereits über Trägermaterial 18 verfügen, in das Samen oder Jungpflanzen 8 durch die Bestückungseinheit 12 eingebracht werden oder dass die einzelnen Aufnahmen 3 des Förderbandes 2 mit einem Samen oder einer Jungpflanze 8, deren Wurzeln sich bereits im Trägermaterial 18 befinden, bestückt werden.

Figur 2 zeigt eine Draufsicht auf einen Ausschnitt eines Förderbandes 2, das an das Wachstum der Pflanzen 8 während ihrer Förderung entlang der Förderstrecke 1 angepasst werden kann. Eine entsprechende Verstellung des Abstandes zwischen den einzelnen Aufnahmeelementen 3 ist sinnvoll, da sich mit zunehmendem Wachstum der Pflanzen 8 insbesondere der Blattanteil, beispielsweise bei Salatköpfen, erhöht und somit auch der Flächenbedarf der einzelnen Pflanzen 8 wächst Aus diesem Grund werden die einzelnen Aufnahmeelemente 3 des Förderbandes 2 auf geeignete Weise mittels mechanischer Elemente auseinandergezogen, sodass die einzelne Pflanze 8 mehr Platz bzw. Raum für ihr Wachstum hat und eine ausreichende Beleuchtung der Pflanze sichergestellt wird.

Die zuvor beschriebene Anpassung wird im Wesentlichen dadurch erreicht, dass der Abstand zwischen den Aufnahmeelementen 3, in denen jeweils eine Pflanze 8 bzw. deren Wurzel im Trägermaterial 18 fixiert ist, in Abhängigkeit der Verweildauer der Pflanzen 8 auf dem Förderband 2 variiert wird. Unter Berücksichtigung des Umfangs und der Geschwindigkeit des Pflanzenwachstums werden die Abstände zwischen den einzelnen Aufnahmen während des Transports der Pflanzen 8 vergrößert. Hierzu wird in Figur 2 jeweils ein Ausschnitt eines Förderbandes 2 mit daran fixierten Pflanzen 8 in zwei unterschiedlichen Wachstumsstadien der Pflanzen 8 gezeigt. Während sich die in Figur 2 a) gezeigten Pflanzen 8 noch am Anfang der Förderstrecke 1 befinden und vergleichsweise klein sind, befinden sie sich in dem in Figur 2 b) dargestellten Zustand bereits unmittelbar vor der Ernte und haben daher eine entsprechende Größe erreicht. Um dieses Grö-ßenwachstum zu berücksichtigen, sind die Abstände zwischen den einzelnen Aufnahmeelemente 3 in Figur 2 b) deutlich größer als die entsprechenden Abstände in Figur 2 a).

Bei der in Figur 2 gezeigten Ausführungsform verfügt das Förderband 2 über Förderketten 15, an denen die einzelnen Pflanzenaufnahmen 3 über geeignete, elastische Transportbänder 16 befestigt sind. Die Transportbänder 16 sind derart ausgeführt, dass sowohl der Abstand "A" zwischen den parallel angeordneten Transportbändern 16 als auch der Abstand "B" zwischen den jeweils an einem Transportband 16 befestigten Aufnahmeelementen 3 verändert werden können. Während eine Veränderung des Abstandes "A" durch eine Bewegung der Transportbänder 16 nach außen realisiert wird, werden die Abstände "B" zwischen den einzelnen Aufnahmen 3 durch eine elastische Dehnung der Transportbänder 16 in Längsrichtung verändert. Gleichermaßen wird eine Vergrößerung der Abstände zu den nicht direkt mit den Transportbändern 16 verbundenen Aufnahmeelementen 3 erreicht, indem zwischen den Aufnahmeelementen 3 elastische Verbindungselemente 17 vorgesehen sind, die bei einer Verstellung der Transportbänder 16 entsprechend gedehnt werden.

Die Befestigung der Aufnahmen 3 an den Transportbändern 16 kann durch Einhängen zumindest eines Teils der Aufnahmen 3 in die Transportbänder 16 erfolgen. Ebenso ist es denkbar, dass wenigstens ein Teil der Aufnahmen 3 fest mit jeweils einem Transportband 16 verbunden ist.

Wie Figur 2 zu entnehmen ist, müssen allerdings nicht alle Aufnahmen 3 direkt mit einem Transportband 16 verbunden sein, sondern können auch mittelbar mit Hilfe elastischer Verbindungen 17 über andere Aufnahmen 3 mit wenigstens einem Transportband 16 verbunden sein. Mit zunehmender Transportzeit der Pflanzen 8 werden die Transportbänder 16 einerseits auseinanderbewegt und andererseits in Längsrichtung gedehnt, beispielsweise durch Aufrollen der Transportbänder um Trommel, die mit Hilfe des Transportmechanismus entlang der Förderstrecke bewegt werden, sodass sich die Abstände der Aufnahmen 3 mit den darin befindlichen Pflanzen 8 vergrößern. In diesem Zusammenhang ist es ebenfalls denkbar, dass lediglich zwischen den einzelnen Aufnahmeelementen 3 elastisch dehnbare Elemente 17 vorgesehen sind und lediglich die äußeren Aufnahmen 3, nämlich in Figur 2 die jeweils an den Eckpunkten befindlichen Aufnahmen 3 nach außen gezogen werden. Genauso könnten die Aufnahmen 3 an unterschiedlichen Stellen eines elastischen Netzes angeordnet sein oder ein entsprechendes elastisches Netz könnte zumindest einen Teil des Förderbandes 2 bilden, wobei das Netz bedarfsgerecht, insbesondere in Abhängigkeit des Pflanzenwachstums, auseinandergezogen werden kann, um die Abstände zwischen den Aufnahmen 3 bedarfsgerecht zu verändern.

Weiterhin ist es denkbar, dass die Bewegung der einzelnen Aufnahmen 3 nicht aufgrund der Bewegung elastischer Verbindungelemente 17 erfolgt, sondern die Aufnahmen 3 einzeln aktiv verfahrbar sind. Unabhängig von der Art des gewählten Mechanismus ist es wesentlich, dass die Abstände zwischen den einzelnen Aufnahmeelementen sowohl in Förderrichtung als auch senkrecht hierzu verändert werden, um dem zunehmenden Platzbedarf der Pflanzen Rechnung zu tragen.

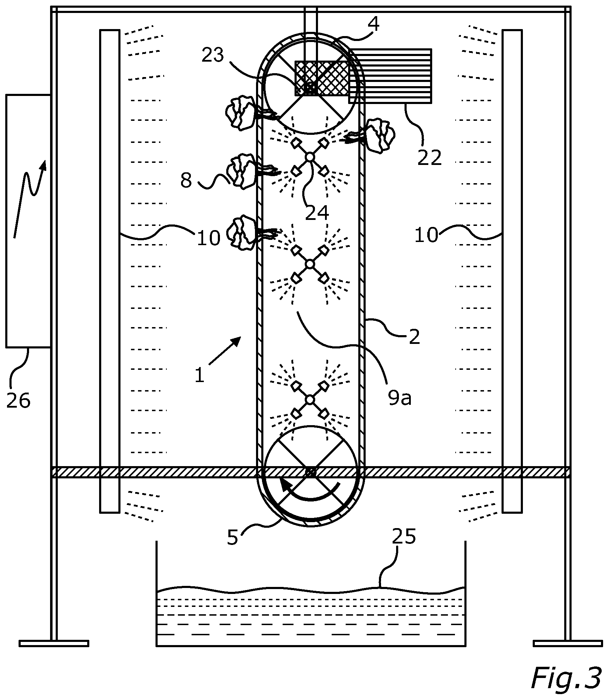

Um die technische Machbarkeit zu überprüfen und die Vorteile der erfindungsgemäßen Lösung zu belegen, wurde ein Demonstrator aufgebaut, der schematisch in Figur 3 gezeigt ist Dieser Demonstrator verfügt über eine Förderstrecke 1 mit einem in einem Oval umlaufenden Förderband 2, das zwei vertikale Streckenabschnitte 6 und im Bereich des oberen Umlenkpunkts 4 sowie des unteren Umlenkpunkts 5 jeweils horizontale Streckenabschnitte 7 aufweist. Die horizontalen Streckenabschnitte 7 der Förderstrecke 1 sind aufgrund der Ausführung des Demonstrators vergleichsweise kurz und beschränken sich auf den jeweiligen Umkehrbereich des Förderbandes 2.

Das Förderband 2 verfügt über Lamellen aus einem Kunststoff, bevorzugt aus Polyvinylchlorid (PVC), die in Form von Rollladenelementen ausgeführt sind und auf denen die Pflanzen 8 derart angeordnet sind, dass die Wurzeln in einen Bereich 19 unterhalb des Förderbandes 2 hineinragen, während das Blattwerk und/oder die Früchte in einen Bereich 20 oberhalb des Förderbandes 2 hineinragen. Unterhalb des Förderbandes bzw. innerhalb des oval umlaufenden Förderbandes 2 befindet sich eine Nährstoffversorgungseinheit 9 die Mittel zur aeroponischen Nährstoffversorgung 9a aufweist. Die aeroponische Nährstoffversorgungseinheit verfügt in dem gezeigten Ausführungsbeispiel über drei Sprühdüsen 24 in Form von Vierdüsenköpfen mit Tropfenstopp, die an ein rezirkulierendes Wasserpumpensystem mit einem Nährstofflösungstank 25 angeschlossen sind.

Angetrieben wird das Förderband 2 mit Hilfe eines Elektromotors 22, der über ein Schneckengetriebe 23 mit dem Förderband 2 verbunden ist.

Zur Beleuchtung der Pflanzen sind als Beleuchtungseinheit 10 im Bereich 20 oberhalb des Förderbandes parallel zu den vertikalen Streckenabschnitten 6 Beleuchtungsleisten mit LEDs vorgesehen. Der Antriebsmotor 22 und die als Beleuchtungseinheit 10 dienenden Beleuchtungsleisten sind mit einer zentralen Steuereinheit 26 verbunden, die sowohl die Beleuchtung als auch die Geschwindigkeit, mit der die Pflanzen entlang der Förderstrecke 1 bewegt werden, an die Bedürfnisse der jeweils bewegten Pflanzen anpasst. Beispielsweise können auf diese Weise Beleuchtungs- und Dunkel- bzw. Beschattungshasen variiert werden. Der in Figur 3 gezeigte Demonstrator wurde in einer Klimakammer mit variabler Klimaführung installiert und für Wachstumsversuche an verschiedenen Salatsorten eingesetzt.

Ausgehend von dem in Figur 3 dargestellten Demonstrator ist es denkbar, diesen oder eine zumindest ähnlich ausgeführte Vorrichtung als Grundmodul für eine Pflanzenaufzuchtanlage, die eine Mehrzahl derartiger Grundmodule aufweist, zu verwenden. Wesentlich hierbei ist, dass es wiederum möglich ist, in Abhängigkeit der jeweiligen Bedürfnisse einer Pflanze eine Pflanzenaufzuchtanlage bereitzustellen, die eine bedarfsangepasste und somit optimierte Anordnung von Vertikal- und Horizontalstrecken 6, 7 gewährleistet

Mit dem in Figur 3 gezeigten Demonstrator wurde ein spezieller Versuch zur Pflanzenaufzucht durchgeführt. Als Saatmaterial wurde eine professionelle pelletierte Salatsorte (Expertize RZ) der Firma Rijkzwaan eingesetzt. Diese wurde in einem ersten Schritt für 11 Tage in 2 cm Steinwolleblocks unter 120 µmol/s/m² LED-Licht (blue/dark red) in Nährlösung vorgezogen. Die Temperatur wurde dabei tagsüber für 18 h auf 27°C mit 65% Luftfeuchte und nachts für 6 h auf 19°C und 55% Luftfeuchte eingestellt. Die Beleuchtung wurde entsprechend für 18 h ein- und für 8 h ausgeschaltet

Das Umsetzen der Jungpflanzen in den Demonstrator erfolgte an Tag 12, wobei diese gleichzeitig in 10 cm Steinwolleblocks für die hydroponische NFT-Kultivierung (NFT - nutrient film technique) umgesetzt wurden. Die Beleuchtung mit ~135 µmol/s/m² wurde mit blauen und dunkelroten LED-Lichtleisten (GreenPower production module, Fa. Philips) realisiert. Für die aeroponische Nähstoffversorgung wurde ein auf 5 bar ausgelegtes Vernebelungssystem (Fa. Netafim) mit Intervallbesprühung eingesetzt, wobei für eine Dauer von 5 s Nährstofflösung versprüht wurde und dann die Besprühung für 4 min ausgeschaltet wurde.

Der pH-Wert der Nährlösung wurde zwischen 5,5 und 6,5 mit verdünnter 5%igen Salpetersäure eingestellt und der Nährstoffgehalt mittels Flüssigdüngers (Fa. YARA) auf 0,8-1,0 EC (elektrische Konduktivität) gehalten.

Während der gesamten Kultivierungsphase wurden die Pflanzen im Verlauf von 24 h einer 360° Drehung durch schrittweise Bewegung des Förderbandes unterzogen. Nach 3 Wochen Kultivierung wurde die Blattbiomasse durch Wiegen bestimmt

Im Folgenden werden die Ergebnisse des zuvor beschriebenen Pflanzenaufzuchtversuchs dargestellt. Es konnte nach einer dreiwöchigen Kultivierung in der Demonstratoranlage, wie sie in Figur 3 dargestellt ist, eine signifikante (Ttest: 0,03) Zunahme von bis zu 25% an Blattbiomasse im Vergleich zu einer standardmäßig ausgeführten hydroponischen NFT-Kultivierung unter LED-Beleuchtung beobachtet werden. Durch die ständige orbitropale Neuausrichtung konnte des Weiteren eine homogene runde Salatkopfausbildung generiert werden. Im Gegensatz dazu wiesen die stationär horizontal an einer vertikalen Wand kultivierten Pflanzen eine starke Ausprägung zum Gravitationsfeld der Erde und eine deformierte Kopfbildung auf. Somit konnte gezeigt werden, dass das erfindungsgemäße Ausführungsbeispiel ein gutes Pflanzenwachstum induziert

### Bezugszeichenliste

- 1: Förderstrecke
- 2: Förderband
- 3: Aufnahme
- 4: oberer Umlenkpunkt
- 5: unterer Umlenkpunkt
- 6: vertikaler Streckenabschnitt
- 7: horizontaler Streckenabschnitt
- 8: Pflanze
- 9: Nährstoffversorgungseinheit 9a aeroponische Nährstoffversorgungseinheit 9b hydroponische Nährstoffversorgungseinheit
- 10: Beleuchtungseinheit
- 11: Beschattungsphase
- 12: Bestückungseinheit
- 13: Ernteeinheit
- 14: Reinigungs- und Sterilisationseinheit
- 15: Förderkette
- 16: Transportband
- 17: elastische Verbindungselemente
- 18: Trägermaterial
- 19: Bereich unterhalb des Förderbandes
- 20: Bereich oberhalb des Förderbandes
- 21: Verstelleinheit
- 22: Elektromotor
- 23: Schneckengetriebe
- 24: Sprühdüse
- 25: Nähstoffmediumtank
- 26: zentrale Steuereinheit

## Patentansprüche

1. Vorrichtung zur Förderung des Wachstums von Pflanzen (8) mit einem entlang einer Förderstrecke (1) bewegbaren Förderband (2) zum wenigstens abschnittsweisen Transport von Pflanzen (8), die während einer Bewegung entlang der Förderstrecke (1) zumindest zeitweise von einer Nährstoffversorgung (9) mit Nährstoffen versorgt und mit natürlichem Licht und/oder mit Licht, das von einer Beleuchtungseinheit (10) künstlich erzeugt wird, bestrahlt werden, wobei die Förderstrecke (1) in wenigstens einem ersten Abschnitt (7) zumindest annähernd horizontal und in wenigstens einem zweiten Abschnitt (6) zumindest annähernd vertikal angeordnet ist, wobei das entlang der Förderstrecke (1) bewegte Förderband (2) auf einer geschlossenen Kreis- oder Ovalbahn derart bewegt wird, dass eine Umlenkung jeweils im Bereich eines oberen Umlenkpunkts (4) und eines unteren Umlenkpunkts (5) erfolgt, die die vertikalen Abschnitte (6) miteinander verbinden, **dadurch gekennzeichnet, dass** die Pflanzen (8) zumindest zeitweise während
des Transports entlang der Förderstrecke (1) derart relativ zum Förderband (2) fixiert sind, dass Wurzeln der Pflanzen (8) zumindest teilweise in einen unterhalb einer Unterseite des Förderbandes (2) angeordneten Bereich (19) hineinragen, wobei unterhalb des Förderbandes eine Nährmediumversorgung (9) zur aeroponischen Versorgung der Wurzeln mit Nährmedium angeordnet ist, während Blätter und/oder Früchte der Pflanzen (8) wenigstens teilweise in einen oberhalb einer Oberseite des Förderbandes, die der Unterseite gegenüberliegt, angeordneten Bereich (20) hineinragen und dass die Pflanzen einer ständigen orbitropalen Neuausrichtung in Bezug auf das Gravitationsfeld der Erde ausgesetzt sind, wobei die Ausrichtung der Pflanzen, von der Wurzel zur Sprossspitze, senkrecht zur Bewegungsrichtung der Pflanzen ist.

2. Vorrichtung nach Anspruch 1,
**dadurch gekennzeichnet, dass** die Nährstoffversorgung (9) in dem unterhalb der Unterseite des Förderbandes liegenden Bereich (19) eine Versorgungseinheit (9) zur aeroponischen Versorgung der Pflanzen (8) mit Nährstoffen aufweist, die ein Nährmedium vernebelt und/oder in Richtung auf die Unterseite des Förderbandes ausbringt.

3. Vorrichtung nach Anspruch 1 oder 2,
**dadurch gekennzeichnet, dass** das Förderband (2) wenigstens bereichsweise ein Trägermaterial (18) aufweist, in dem die Pflanzen (8) zumindest zeitweise während des Transports entlang der Förderstrecke (1) fixiert sind.

4. Vorrichtung nach einem der Ansprüche 1 bis 3,
**dadurch gekennzeichnet, dass** eine zumindest teilweise automatisierte Bestückungseinheit (12) vorgesehen ist, die das Förderband (2) mit Pflanzensamen und/oder Jungpflanzen (8) bestückt

5. Vorrichtung nach einem der Ansprüche 1 bis 4,
**dadurch gekennzeichnet, dass** entlang der Förderstrecke (1) wenigstens ein von der Beleuchtungseinheit (10) beleuchteter und ein unbeleuchteter Teilabschnitt (11) angeordnet.

6. Vorrichtung nach einem der Ansprüche 1 bis 5,
**dadurch gekennzeichnet, dass** das Förderband (2) eine Mehrzahl von beweglich mit einander verbundenen Lamellen aufweist

7. Vorrichtung nach einem der Ansprüche 1 bis 6,
**dadurch gekennzeichnet, dass** die Nährstoffversorgung (9) über wenigstens ein Tauchbad (9b) mit Nährlösung verfügt, durch das zumindest Wurzeln der Pflanzen (8) wenigstens abschnittsweise entlang der Förderstrecke (1) geführt werden.

8. Vorrichtung nach einem der Ansprüche 1 bis 7,
**dadurch gekennzeichnet, dass** wenigstens eine Verstelleinheit vorgesehen ist, um eine Länge der vertikal angeordneten Abschnitte (6) zu verändern.

9. Vorrichtung nach einem der Ansprüche 1 bis 8,
**dadurch gekennzeichnet, dass** eine zumindest teilweise automatisierte Ernteeinheit (13) vorgesehen ist, die Pflanzen (8) zumindest teilweise vom Förderband (2) entfernt

10. Vorrichtung nach einem der Ansprüche 1 bis 9,
**dadurch gekennzeichnet, dass** in einem Bereich der Förderstrecke (1), der zwischen einem Bereich, in dem die Pflanzen zumindest teilweise vom Förderband (2) entfernt werden, und einem Bereich, in dem Pflanzensamen und/oder Jungpflanzen (8) auf dem Förderband (2) fixiert werden, liegt eine Reinigungs- und/oder Sterilisationseinheit (14) zur Reinigung und /oder Sterilisation des Förderbandes (2) angeordnet ist

11. Vorrichtung nach einem der Ansprüche 1 bis 10,
**dadurch gekennzeichnet, dass** das entlang der Förderstrecke (1) bewegte Förderband (2) in einem Oval umläuft, das zwei vertikale Streckenabschnitte (6) und im Bereich des oberen Umlenkpunkts (4) sowie des unteren Umlenkpunkts (5) jeweils horizontale Streckenabschnitte (7) aufweist, wobei die horizontalen Streckenabschnitte (7) vergleichsweise kurz sind und sich auf den jeweiligen Umkehrbereich des Förderbandes (2) beschränken.

12. Vorrichtung nach einem der Ansprüche 1 bis 11,
**dadurch gekennzeichnet, dass** das entlang der Förderstrecke (1) bewegte Förderband (2) auf einer geschlossenen Ovalbahn bewegt wird, sodass zwei vertikale Abschnitte (6) sowie im Bereich eines oberen und eines unteren Umlenkpunktes (4, 5) jeweils horizontale Abschnitte (7), die die vertikalen Abschnitte (6) miteinander verbinden, vorgesehen sind, wobei durch Veränderung einer Länge der vertikalen Abschnitte (6) des Förderbandes (2) eine Höhe einer Pflanzenaufzuchtanlage zumindest nahezu beliebig ausführbar ist

13. Verwendung einer Vorrichtung nach einem der Ansprüche 1 bis 12 zur Aufzucht von Erdbeeren, Schnittsalaten, Spinat, Rucola und/oder Buschtomaten.

14. Verfahren zur Förderung des Wachstums von Pflanzen (8), bei dem die Pflanzen (8) mit einem Förderband (2) entlang einer Förderstrecke (1) bewegt, während der Bewegung entlang der Förderstrecke (1) zumindest zeitweise von einer Nährstoffversorgung (9 mit Nährstoffen versorgt und mit natürlichem Licht und/oder mit von einer Beleuchtungseinheit (10) künstlich erzeugtem Licht bestrahlt werden, wobei die Pflanzen (8) in wenigstens einem ersten Abschnitt (7) der Förderstrecke (1) zumindest annähernd in horizontaler Richtung und in wenigstens einem zweiten Abschnitt (6) der Förderstrecke (1) zumindest annähernd in vertikaler Richtung bewegt werden, wobei das entlang der Förderstrecke (1) bewegte Förderband (2) auf einer geschlossenen Kreis- oder Ovalbahn bewegt und jeweils in einem oberen Umlenkpunkt (4) und einem unteren Umlenkpunkt (5) umgelenkt wird, **dadurch gekennzeichnet, dass** die Pflanzen (8) zumindest zeitweise während des Transports entlang der Förderstrecke (1) derart relativ zum Förderband (2) fixiert werden, dass Wurzeln der Pflanzen (8) zumindest teilweise in einen unterhalb einer Unterseite des Förderbandes angeordneten Bereich (19) hineinragen, in dem die Wurzeln aeroponisch mit Nährmedium versorgt werden, während Blätter und/oder Früchte der Pflanzen wenigstens teilweise in einen oberhalb einer Oberseite des Förderbandes, die der Unterseite gegenüberliegt, angeordneten Bereich (20) hineinragen und dass die Pflanzen einer ständigen orbitropalen Neuausrichtung in Bezug auf das Gravitationsfeld der Erde ausgesetzt sind, wobei die Ausrichtung der Pflanzen, von der Wurzel zur Sprossspitze, senkrecht zur Bewegungsrichtung der Pflanzen ist.

15. Verfahren nach Anspruch 14,
**dadurch gekennzeichnet, dass** die Pflanzen (8) während sie zumindest annähernd vertikal bewegt werden wenigstens zeitweise aeroponisch mit Wasser und/oder Nährstoffen versorgt werden.

16. Verfahren nach Anspruch 14 oder 15,
**dadurch gekennzeichnet, dass** die Länge der vertikalen Abschnitte (6) des Förderbandes (2) verändert wird.

17. Verfahren nach einem der Ansprüche 14 bis 16,
**dadurch gekennzeichnet, dass** zumindest zeitweise die gesamte Förderstrecke (1) beleuchtet wird.

18. Verfahren nach einem der Ansprüche 14 bis 17,
**dadurch gekennzeichnet, dass** das Förderband (2) entlang der Förderstrecke (1) in einem Oval bewegt wird, das zwei vertikale Streckenabschnitte (6) und im Bereich des oberen Umlenkpunkts (4) sowie des unteren Umlenkpunkts (5) jeweils horizontale Streckenabschnitte (7) aufweist, wobei die horizontalen Streckenabschnitte (7) vergleichsweise kurz sind und sich auf den jeweiligen Umkehrbereich des Förderbandes (2) beschränken.

19. Verfahren nach einem der Ansprüche 14 bis 18,
**dadurch gekennzeichnet, dass** das Förderband (2) entlang der Förderstrecke (1) auf einer geschlossenen Ovalbahn bewegt wird, sodass zwei vertikale Abschnitte (6) sowie im Bereich eines oberen und eines unteren Umlenkpunktes (4, 5) jeweils horizontale Abschnitte (7), die die vertikalen Abschnitte (6) miteinander verbinden, vorgesehen sind, wobei eine Höhe einer Pflanzenaufzuchtanlage durch Veränderung einer Länge der vertikalen Abschnitte (6) des Förderbandes (2) eingestellt wird.

## Claims

1. Device for promoting the growth of plants (8), comprising a conveyor belt (2) which can be moved along a conveyor line (1) and is intended for transporting, at least in sections, plants (8) which, during movement along the conveyor line (1), are at least temporarily supplied with nutrients by a nutrient supply (9) and illuminated with natural light and/or with light artificially generated by an illumination unit (10), wherein the conveyor line (1) is arranged at least approximately horizontally in at least one first section (7) and at least approximately vertically in at least one second section (6),
wherein the conveyor belt (2) moved along the conveyor line (1) is moved on a closed circular or oval path in such a way that a deflection takes place in each case in the region of an upper deflection point (4) and a lower deflection point (5), which connect the vertical sections (6) to one another, **characterized in that** the plants (8) are at least temporarily fixed relative to the conveyor belt (2) during transport along the conveyor line (1) such that at least parts of roots of the plants (8) protrude into a region (19) located below a lower side of the conveyor belt (2), wherein a nutrient medium supply (9) for aeroponically supplying the roots with nutrient medium is arranged below the conveyor belt, while at least parts of leaves and/or fruits of the plants (8) protrude into a region (20) located above an upper side of the conveyor belt which is opposite to the lower side, and **in that** the plants are exposed to a constant orbitropical realignment with respect to the gravitational field of the earth, wherein the alignment of the plants, from the root to the shoot tip, is perpendicular to the direction of movement of the plants.

2. Device according to Claim 1,
**characterized in that** the nutrient supply (9) comprises, in the region (19) located below the lower side of the conveyor belt, a supply unit (9) for aeroponically supplying the plants (8) with nutrients, the supply unit misting a nutrient medium and/or discharging said nutrient medium towards the lower side of the conveyor belt

3. Device according to Claim 1 or Claim 2,
**characterized in that** the conveyor belt (2) has, at least in regions, a carrier material (18) in which the plants (8) are fixed at least temporarily during transport along the conveyor line (1).

4. Device according to any of Claims 1 to 3,
**characterized in that** an at least partially automated loading unit (12) is provided, which loads the conveyor belt (2) with plant seeds and/or seedlings (8).

5. Device according to any of Claims 1 to 4,
**characterized in that** at least one section (11) that is illuminated by the illumination unit (10) and one section that is not illuminated are arranged along the conveyor line (1).

6. Device according to any of Claims 1 to 5,
**characterized in that** the conveyor belt (2) has a plurality of slats movably connected to one another.

7. Device according to any of Claims 1 to 6,
**characterized in that** the nutrient supply (9) has at least one immersion bath (9b) with nutrient solution, through which at least roots of the plants (8) are guided at least in sections along the conveyor line (1).

8. Device according to any of Claims 1 to 7,
**characterized in that** at least one adjustment unit is provided to change a length of the vertically arranged sections (6).

9. Device according to any of Claims 1 to 8,
**characterized in that** an at least partially automated harvesting unit (13) is provided, which at least partially removes plants (8) from the conveyor belt (2).

10. Device according to any of Claims 1 to 9,
**characterized in that** a cleaning and/or sterilization unit (14) for cleaning and/or sterilizing the conveyor belt (2) is arranged in a region of the conveyor line (1) located between a region in which the plants are removed from the conveyor belt (2) at least in part and a region in which plant seeds and/or seedlings (8) are fixed on the conveyor belt (2).

11. Device according to any of Claims 1 to 10,
**characterized in that** the conveyor belt (2) moved along the conveyor line (1) runs in an oval which has two vertical line sections (6) and, in the region of the upper deflection point (4) and the lower deflection point (5), has in each case horizontal line sections (7), wherein the horizontal line sections (7) are comparatively short and are limited to the respective reversal region of the conveyor belt (2).

12. Device according to any of Claims 1 to 11,
**characterized in that** the conveyor belt (2), which is moved along the conveyor line (1), is moved on a closed oval path, such that two vertical sections (6) and horizontal sections (7), which connect the vertical sections (6) to one another, are provided in each case in the region of an upper and a lower deflection point (4, 5), wherein it is possible for a height of a plant propagation system to be implemented at least largely as desired by changing a length of the vertical sections (6) of the conveyor belt (2).

13. Use of a device according to any of Claims 1 to 12 for growing strawberries, salad leaves, spinach, rocket and/or bush tomatoes.

14. Method for promoting the growth of plants (8), in which the plants (8) are moved along a conveyor line (1) by a conveyor belt (2), and during the movement along the conveyor line (1) are supplied with nutrients at least temporarily by a nutrient supply (9) and are illuminated with natural light and/or with light artificially generated by an illumination unit (10), wherein the plants (8) are moved at least approximately horizontally in at least one first section (7) of the conveyor line (1) and at least approximately vertically in at least one second section (6) of the conveyor line (1),
wherein the conveyor belt (2) moved along the conveyor line (1) moves on a closed circular or oval path and is deflected in each case at an upper deflection point (4) and a lower deflection point (5), **characterized in that** the plants (8) are fixed relative to the conveyor belt (2) at least temporarily during transport along the conveyor line (1) in such a way that roots of the plants (8) protrude at least partially into a region (19) arranged below a lower side of the conveyor belt, in which the roots are aeroponically supplied with nutrient medium, while at least parts of leaves and/or fruits of the plants protrude into a region (20) located above an upper side of the conveyor belt which is opposite to the lower side, and **in that** the plants are exposed to a constant orbitropical realignment with respect to the gravitational field of the earth, wherein the alignment of the plants, from the root to the shoot tip, is perpendicular to the direction of movement of the plants.

15. Method according to Claim 14,
**characterized in that** the plants (8) are at least temporarily aeroponically supplied with water and/or nutrients while being moved at least approximately vertically.

16. Method according to Claim 14 or 15,
**characterized in that** the length of the vertical sections (6) of the conveyor belt (2) is changed.

17. Method according to any of Claims 14 to 16,
**characterized in that** the entire conveyor line (1) is at least temporarily illuminated.

18. Method according to any of Claims 14 to 17,
**characterized in that** the conveyor belt (2) is moved along the conveyor line (1) in an oval which has two vertical line sections (6) and, in the region of the upper deflection point (4) and the lower deflection point (5), in each case has horizontal line sections (7), wherein the horizontal line sections (7) are comparatively short and are limited to the respective reversal region of the conveyor belt (2).

19. Method according to any of Claims 14 to 18,
**characterized in that** the conveyor belt (2) is moved along the conveyor line (1) on a closed oval path, such that two vertical sections (6) and horizontal sections (7), which connect the vertical sections (6) to one another, are provided in the region of an upper and a lower deflection point (4, 5), wherein a height of a plant propagation system is adjusted by changing a length of the vertical sections (6) of the conveyor belt (2).

## Revendications

1. Dispositif pour favoriser la croissance de plantes (8) avec une bande transporteuse (2) mobile le long d'une ligne de transport (1) pour le transport au moins par sections de plantes (8) qui, pendant un mouvement le long de la ligne de transport (1), sont alimentées au moins temporairement en substances nutritives par une alimentation en substances nutritives (9) et sont éclairées par de la lumière naturelle et/ou de la lumière, qui est produite artificiellement par une unité d'éclairage (10), la ligne de transport (1) étant disposée au moins approximativement horizontalement dans au moins une première section (7) et au moins approximativement verticalement dans au moins une deuxième section (6),
dans lequel la bande transporteuse (2) déplacée le long de la ligne de transport (1) est déplacée sur une trajectoire circulaire ou ovale fermée de telle sorte qu'une déviation s'effectue respectivement dans la zone d'un point de déviation supérieur (4) et d'un point de déviation inférieur (5), qui relient les sections verticales (6) les unes aux autres, **caractérisé en ce que** les plantes (8) sont fixées au moins temporairement par rapport à la bande transporteuse (2) pendant le transport le long de la ligne de transport (1) de telle sorte que les racines des plantes (8) pénètrent au moins partiellement dans une zone (19) disposée sous une face inférieure de la bande transporteuse (2), une alimentation en milieu nutritif (9) étant disposée sous la bande transporteuse pour l'alimentation aéroponique des racines en milieu nutritif, tandis que les feuilles et/ou les fruits des plantes (8) pénètrent au moins partiellement dans une zone (20) disposée sur une face supérieure de la bande transporteuse qui est opposée à la face inférieure, et **en ce que** les plantes sont exposées à un réalignement orbitropal permanent par rapport au champ gravitationnel de la terre, l'orientation des plantes, de la racine à la pointe, étant perpendiculaire à la direction de déplacement des plantes.

2. Dispositif selon la revendication 1,
**caractérisé en ce que** l'alimentation en substances nutritives (9) dans la zone (19) située sous la face inférieure de la bande transporteuse présente une unité d'alimentation (9) pour l'alimentation aéroponique des plantes (8) en substances nutritives, qu'un milieu nutritif nébulise et/ou épand en direction de la face inférieure de la bande transporteuse.

3. Dispositif selon la revendication 1 ou 2,
**caractérisé en ce que** la bande transporteuse (2) présente au moins par zones un matériau de support (18) dans lequel les plantes (8) sont fixées au moins temporairement pendant le transport le long de la ligne de transport (1).

4. Dispositif selon l'une des revendications 1 à 3,
**caractérisé en ce que** une unité de chargement (12) au moins partiellement automatisée est prévue, laquelle charge la bande transporteuse (2) avec des graines de plantes et/ou des jeunes plantes (8).

5. Dispositif selon l'une des revendications 1 à 4,
**caractérisé en ce qu'**au moins une section partielle (11) éclairée par l'unité d'éclairage (10) et une section partielle (11) non éclairée sont disposées le long de la ligne de transport (1).

6. Dispositif selon l'une des revendications 1 à 5,
**caractérisé en ce que** la bande transporteuse (2) présente une pluralité de lamelles reliées entre elles de manière mobile.

7. Dispositif selon l'une des revendications 1 à 6,
**caractérisé en ce que** l'alimentation en substances nutritives (9) dispose d'au moins un bain d'immersion (9b) avec une solution nutritive, à travers lequel au moins les racines des plantes (8) sont guidées au moins par sections le long de la ligne de transport (1).

8. Dispositif selon l'une des revendications 1 à 7,
**caractérisé en ce qu'**au moins une unité de réglage est prévue pour modifier une longueur des sections (6) disposées verticalement

9. Dispositif selon l'une des revendications 1 à 8,
**caractérisé en ce qu'**une unité de récolte (13) au moins partiellement automatisée est prévue pour éloigner au moins partiellement les plantes (8) de la bande transporteuse (2).

10. Dispositif selon l'une des revendications 1 à 9,
**caractérisé en ce qu'**une unité de nettoyage et/ou de stérilisation (14) pour le nettoyage et/ou la stérilisation de la bande transporteuse (2) est disposée dans une zone de la ligne de transport (1) entre une zone dans laquelle les plantes sont au moins partiellement retirées de la bande transporteuse (2) et une zone dans laquelle les graines de plantes et/ou les jeunes plantes (8) sont fixées sur la bande transporteuse (2).

11. Dispositif selon l'une des revendications 1 à 10,
**caractérisé en ce que** la bande transporteuse (2) déplacée le long de la ligne de transport (1) tourne dans un ovale qui présente deux sections de ligne verticales (6) et, dans la zone du point de déviation supérieur (4) ainsi que du point de déviation inférieur (5), respectivement des sections de ligne horizontales (7), les sections de ligne horizontales (7) étant relativement courtes et se limitant à la zone d'inversion respective de la bande transporteuse (2).

12. Dispositif selon l'une des revendications 1 à 11,
**caractérisé en ce que** la bande transporteuse (2) déplacée le long de la ligne de transport (1) est déplacée sur une trajectoire ovale fermée, de sorte que deux sections verticales (6) ainsi que des sections horizontales respectives (7) reliant les sections verticales (6) sont prévues dans la zone d'un point de déviation supérieur et d'un point de déviation inférieur (4, 5), une hauteur d'une installation de culture de plantes pouvant être réalisée au moins presque à volonté en modifiant une longueur des sections verticales (6) de la bande transporteuse (2).

13. Utilisation d'un dispositif selon l'une quelconque des revendications 1 à 12 pour la culture de fraises, de salades de coupe, d'épinards, de roquette et/ou de tomates de brousse.

14. Procédé pour favoriser la croissance des plantes (8), dans lequel les plantes (8) sont déplacées avec une bande transporteuse (2) le long d'une ligne de transport (1), pendant le déplacement le long de la ligne de transport (1), au moins temporairement alimentées en substances nutritives (9) et éclairées par une unité d'éclairage (10), les plantes (8) étant déplacées au moins approximativement dans la direction horizontale dans au moins une première section (7) de la ligne de transport (1) et au moins approximativement dans la direction verticale dans au moins une deuxième section (6) de la ligne de transport (1),
dans lequel la bande transporteuse (2) déplacée le long de la ligne de transport (1) est déplacée sur une trajectoire circulaire ou ovale fermée et est déviée respectivement dans un point de déviation supérieur (4) et un point de déviation inférieur (5), **caractérisé en ce que** les plantes (8) sont fixées au moins temporairement par rapport à la bande transporteuse (2) pendant le transport le long de la ligne de transport (1) de telle sorte que les racines des plantes (8) pénètrent au moins partiellement dans une zone (19) disposée sous une face inférieure de la bande transporteuse, dans laquelle les racines sont alimentées en milieu nutritif de manière aéroponique, tandis que les feuilles et/ou les fruits des plantes pénètrent au moins partiellement dans une zone (20) disposée sur une face supérieure de la bande transporteuse, qui est opposée à la face inférieure, et **en ce que** les plantes sont soumises à un réalignement orbital permanent par rapport au champ gravitationnel de la terre, l'orientation des plantes, de la racine à la pointe de la pousse, étant perpendiculaire à la direction de déplacement des plantes.

15. Procédé selon la revendication 14,
**caractérisé en ce que** les plantes (8) sont alimentées en eau et/ou en substances nutritives au moins temporairement de manière aéroponique pendant qu'elles sont déplacées au moins approximativement verticalement

16. Procédé selon la revendication 14 ou 15,
**caractérisé en ce que** la longueur des sections verticales (6) de la bande transporteuse (2) est modifiée.

17. Procédé selon l'une quelconque des revendications 14 à 16,
**caractérisé en ce que** l'ensemble de la ligne de transport (1) est éclairé au moins temporairement

18. Procédé selon l'une quelconque des revendications 14 à 17,
**caractérisé en ce que** la bande transporteuse (2) est déplacée le long de la ligne de transport (1) dans un ovale qui présente deux sections de ligne verticales (6) et, dans la zone du point de déviation supérieur (4) ainsi que du point de déviation inférieur (5), respectivement des sections de ligne horizontales (7), les sections de ligne horizontales (7) étant relativement courtes et se limitant à la zone d'inversion respective de la bande transporteuse (2).

19. Procédé selon l'une quelconque des revendications 14 à 18,
**caractérisé en ce que** la bande transporteuse (2) est déplacée le long de la ligne de transport (1) sur une trajectoire ovale fermée, de sorte que deux sections verticales (6) ainsi que des sections horizontales respectives (7) reliant les sections verticales (6) sont prévues dans la zone d'un point de déviation supérieur et d'un point de déviation inférieur (4, 5), une hauteur d'une installation de culture de plantes étant ajustée en modifiant une longueur des sections verticales (6) de la bande transporteuse (2).
